# EUROPÄISCHE PATENTANMELDUNG

(11) **EP 3 680 841 A1**
(43) Veröffentlichungstag der Anmeldung: **15.07.2020**
(21) Anmeldenummer: 20150467.7
(22) Anmeldetag: 07.01.2020
(51) Int. Cl.: G06Q 10/10

(54) **VERFAHREN UND SYSTEM ZUR ERSTELLUNG EINER PERSONALISIERTEN E-MAIL**

(30) Priorität: 14.01.2019 DE 102019100767
(71) Anmelder: Bajar, Rahmi, 8051 Zürich (CH)
(72) Erfinder: Bajar, Rahmi, 8051 Zürich (CH)
(74) Vertreter: Ter Meer Steinmeister & Partner

(57) **Zusammenfassung**

Die Erfindung betrifft ein Verfahren zur Erstellung einer personalisierten E-Mail innerhalb eines Mail-Clients, umfassend die Erstellung einer Signatur als Bestandteil der E-Mail aufgrund der Interaktion eines Benutzers mit dem Mail-Client, wobei in die Signatur automatisch ein Portraitbild des Benutzers eingebunden wird.

## Beschreibung

Die vorliegende Erfindung betrifft ein Verfahren zur Erstellung einer personalisierten E-Mail, ein Datenverarbeitungsprogramm, ein computerlesbares Medium sowie ein entsprechendes System.

Es ist bekannt, zur Personalisierung einer E-Mail eine Signatur zu erstellen. Die üblichen Mail-Clients, also Software-Programme zur Erstellung und Verwaltung von E-Mails, weisen eine Funktion auf, durch welche der Benutzer (also der Absender) eine vorgespeicherte Signatur automatisch als Bestandteil einer von ihm selbst verfassten E-Mail generieren kann. Da die Signatur vorgespeichert ist, muss sie nicht jedes Mal aufs Neue verfasst werden. Gewöhnlich umfasst die Signatur einen Textblock und/oder eine Bilddatei.

Es ist erwünscht, E-Mails für den Absender so informativ wie möglich zu gestalten. Insbesondere im kommerziellen Bereich ist es üblich, der Signatur aktuelle Inhalte wie etwa Hinweise auf das Firmenprofil, aktuelle Produkte und dergleichen beizufügen. Es ist jedoch erwünscht, eine Möglichkeit zu schaffen, eine E-Mail noch weiter zu personalisieren, mit dem Ziel, den Empfänger noch persönlicher ansprechen zu können.

Diese Aufgabe wird erfindungsgemäß durch das Verfahren mit den Merkmalen des Anspruchs 1 gelöst.

Erfindungsgemäß wird in die Signatur der E-Mail automatisch zumindest ein Portraitbild des Benutzers eingebunden. Dies bedeutet, dass über den reinen Informationsgehalt üblicher Signaturen hinaus, also beispielsweise außer Informationen über den Absender in Textform, noch eine zusätzliche persönliche Information übermittelt wird, die den Kontakt optisch ansprechender gestaltet. Ein Portraitbild bildet hierzu eine interessante Möglichkeit. Insbesondere im kommerziellen Bereich ist eine solche Personalisierung sinnvoll, etwa dann, wenn ein Unternehmen eine große Anzahl von Mitarbeitern aufweist, die in ständig wechselnden Kundenkontakten stehen, was die Kundenbindung erschwert.

Das Portraitbild kann auf verschiedene Weisen erzeugt werden oder aus verschiedenen Quellen stammen, wie sich unter anderem aus den hier dargestellten Ausführungsbeispielen ergibt.

Gemäß einer bevorzugten Ausführungsform der vorliegenden Erfindung wird das Portraitbild durch eine Kamera aufgenommen. Diese kann beispielsweise in eine Hardware integriert sein, etwa in einen Personal Computer (PC), auf welchem der Mail-Client betrieben wird. Das Portraitbild kann jedoch auch von einer externen Quelle geladen werden.

Vorzugsweise ist das Portraitbild in einem Speicher gespeichert und wird aufgrund der Interaktion des Benutzers aus dem Speicher abgerufen. Das bedeutet, dass die Interaktion des Benutzers, durch welche die Signatur automatisch erstellt wird, auch den Abruf des Portraitbilds aus dem Speicher bewirkt. Beispielsweise führt der Benutzer eine Eingabe durch, wie etwa einen Mausklick auf eine Schaltfläche, durch welche die Signatur generiert wird, die bereits das Portraitbild beinhaltet. Das Portraitbild kann zu diesem Zweck mit einem Benutzerprofil verknüpft sein, welches dem Benutzer durch ein Betriebssystem zugewiesen wird, auf welchem der Mail-Client ausgeführt wird.

Gemäß einer weiteren bevorzugten Ausführungsform der vorliegenden Erfindung wird das Portraitbild durch eine Kamera aufgrund der Interaktion des Benutzers zur Erstellung der Signatur aufgenommen. Dies bedeutet, dass das Portraitbild in Echtzeit unmittelbar aufgrund der Interaktion des Benutzers zur Erstellung der Signatur bzw. gleichzeitig damit aufgenommen werden kann. Das Portraitbild muss in diesem Fall also nicht vorgespeichert sein, sondern wird bei jedem Erstellen der Signatur aufs Neue generiert. Dies kann auch als Sicherheitsmerkmal genutzt werden, durch welches der Absender der E-Mail verifiziert wird. Ist die Kamera nämlich so installiert, dass sich der Benutzer während der Interaktion mit dem Mail-Client in ihrem Gesichtsfeld befindet, werden die Erstellung des Kamerabilds und die Registrierung der Interaktion miteinander verknüpft. Ein solches Sicherheitsmerkmal ist nur sehr schwer zu umgehen.

Weiter vorzugsweise löst die Interaktion des Benutzers zur Erstellung der Signatur und zur Aufnahme des Portraitbilds ferner ein Absenden der E-Mail aus. Hierdurch werden Manipulationsmöglichkeiten des Benutzers des E-Mail-Clients weiter eingeschränkt.

Vorzugsweise ist das Portraitbild ein Standbild.

Gemäß einer weiteren Ausführungsform der Erfindung umfasst das Portraitbild eine Videosequenz, also eine Bildfolge bzw. ein bewegtes Bild.

Die vorliegende Erfindung betrifft ferner ein Datenverarbeitungsprogramm, umfassend Programmcodemittel zur Durchführung des erfindungsgemäßen Verfahrens, wie oben beschrieben. Das Datenverarbeitungsprogramm kann durch einen Computer ausführbare Befehle enthalten, die, wenn sie durch einen Computer ausgeführt werden, den Computer zur Durchführung des erfindungsgemäßen Verfahrens veranlassen.

Ferner betrifft die vorliegende Erfindung ein computerlesbares Medium, auf welchem ein derartiges Datenverarbeitungsprogramm gespeichert ist.

Die vorliegende Erfindung betrifft ferner ein System zur Erstellung einer personalisierten E-Mail, umfassend ein computerlesbares Medium, wie vorstehend genannt, eine Kamera und eine Eingabeeinrichtung zur Eingabe von Instruktionen durch einen Benutzer.

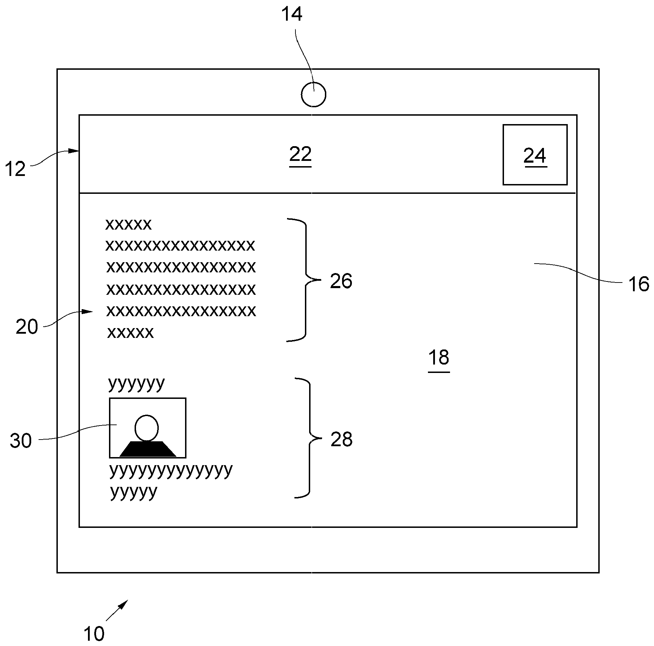

Im Folgenden wird ein bevorzugtes Ausführungsbeispiel der vorliegenden Erfindung anhand der Zeichnung näher erläutert.

Die einzige Figur zeigt eine schematische Ansicht eines Computerbildschirms, umfassend die Darstellung eines E-Mail-Clients einschließlich einer E-Mail.

Der dargestellte Computerbildschirm 10 ist Bestandteil eines Systems zur Erstellung einer personalisierten E-Mail. Weitere Bestandteile des Systems, also insbesondere Hardware-Komponenten zur Durchführung von Eingaben in das System, zum Betrieb des Computerbildschirms 10 und dergleichen sind hier der Einfachheit halber nicht dargestellt. Das System kann insbesondere einen Personal Computer (PC) mit üblichen Komponenten umfassen. Der Computerbildschirm 10 kann somit an einen solchen PC angeschlossen sein, auf welchem ein Betriebssystem läuft, welches wiederum einen Mail-Client ausführen kann. Bei dem Mail-Client handelt es sich um ein Datenverarbeitungsprogramm, das zur Erstellung, zum Senden, zum Empfangen, zum Lesen und zum Verwalten von E-Mails geeignet und eingerichtet ist.

Der Computerbildschirm 10 enthält ein Display 12 und eine oberhalb des Displays 12 in den Rahmen des Computerbildschirms 10 integrierte Kamera 14. Das Gesichtsfeld der Kamera 14 ist derart eingerichtet, dass ein sich vor dem Computerbildschirm 10 befindlicher Benutzer von der Kamera 14 aufgenommen wird.

Auf dem Display 12 ist eine Benutzeroberfläche 16 des Mail-Clients dargestellt. Sie umfasst einen unteren Bereich 18, in welchem eine E-Mail 20 dargestellt ist, und eine oberhalb des unteren Bereichs 18 angeordnete Leiste 22 mit Schaltflächen als Eingabefeldern. Der Einfachheit halber ist lediglich eine Schaltfläche 24 dargestellt, es versteht sich jedoch, dass in üblicher Weise eine große Anzahl von Schaltflächen vorhanden sein kann, um verschiedene Eingaben zu tätigen und eine entsprechende Interaktion des Benutzers mit dem E-Mail-Client auszulösen. Die Eingaben erfolgen durch Mausklick auf die entsprechende Schaltfläche 24. Diese Technologie ist bei grafischen Benutzeroberflächen allgemein bekannt und soll daher nicht weiter beschrieben werden.

Die E-Mail 20 umfasst einen Textkörper 26 und eine Signatur 28 unterhalb des Textkörpers 26. Der Textkörper 26 wird üblicherweise mittels einer Tastatur verfasst, während die Signatur 28 gemäß dem Stand der Technik vorgespeichert ist und aufgrund einer Interaktion des Benutzers mit dem E-Mail-Client generiert wird. Bei dieser Interaktion kann es sich beispielsweise durch einen Mausklick auf die Schaltfläche 24 handeln. Die Signatur 28 kann Textzeilen sowie auch Dateien umfassen.

Erfindungsgemäß umfasst die Signatur 28 zumindest ein Portraitbild 30 des Benutzers. Dieses Portraitbild 30 wird durch die Kamera 14 aufgenommen. Gemäß einer Ausführungsform der vorliegenden Erfindung wird das Portraitbild 30 aufgenommen, in einem Speicher abgespeichert und beim Erstellen der Signatur 28 zu einem späteren Zeitpunkt eingebunden.

Gemäß einer weiteren Ausführungsform der Erfindung wird das Portraitbild 30 durch die Kamera 14 aufgrund der Interaktion des Benutzers, also durch Klicken auf die Schaltfläche 24 aufgenommen. Bei dieser Ausführungsform wird die Signatur also mit einem in Echtzeit durch die Kamera 14 erzeugten Portraitbild 30 generiert. Hierdurch wird die E-Mail personalisiert, aber darüber hinaus auch der Absender verifiziert, da ein Benutzer, der die Schaltfläche 24 bedienen kann, auch automatisch von der Kamera 14 aufgenommen wird. Hierdurch wird ein nur sehr schwer zu umgehendes Sicherheitsmerkmal geschaffen.

Bei dem zumindest einen Portraitbild 30 kann es sich erfindungsgemäß um ein Standbild, also ein Portraitfoto des Benutzers handeln, oder aber auch um eine Mehrzahl von Bildern, ein bewegtes Bild bzw. eine Bildfolge, also eine Videosequenz. Das Standbild kann beispielsweise im JPEG-Format oder auch in einem anderen geeigneten Format vorliegen. Entsprechende Videobildformate, die zum vorliegenden Zweck geeignet sind, wie etwa MP4, sind ebenfalls bekannt.

Im Rahmen der vorliegenden Erfindung ist es auch möglich, dass die Interaktion des Benutzers zur Erstellung der Signatur und zur Aufnahme des mindestens einen Portraitbilds 30, das heißt im vorliegenden Ausführungsbeispiel ein Klick auf die Schaltfläche 24, gleichzeitig auch ein Absenden der E-Mail auslöst, welche die Signatur 28 mit dem Portraitbild 30 beinhaltet. Zwischen dem Erstellen der Signatur 28 einschließlich der Erstellung des Portraitbilds 30 und dem Absenden sind dann keine Zwischenschritte, also Bearbeitungen der E-Mail 20 möglich. Hierdurch wird ein weiteres Sicherheitsmerkmal geschaffen.

Die vorliegende Erfindung umfasst ferner ein Datenverarbeitungsprogramm, also beispielsweise ein entsprechendes Softwareprodukt, das einen E-Mail-Client umfasst. Ferner betrifft die Erfindung ein computerlesbares Medium, auf welchem ein entsprechendes Datenverarbeitungsprogramm gespeichert ist. Das Datenverarbeitungsprogramm umfasst Befehle, welche dann, wenn sie auf einem Computer ausgeführt werden, diesen Computer zur Durchführung des erfindungsgemäßen Verfahrens veranlassen, d.h. insbesondere zur Darstellung des E-Mail-Clients mit der Benutzeroberfläche 16, umfassend die Schaltfläche 24 und weitere Komponenten, die zur Interaktion des Benutzers mit dem E-Mail-Client notwendig sind.

Die vorliegende Erfindung umfasst darüber hinaus ein System zur Erstellung einer personalisierten E-Mail, umfassend ein derartiges computerlesbares Medium, die Kamera 14 und eine Eingabeeinrichtung zur Eingabe von Instruktionen durch einen Benutzer. Bei dieser Eingabeeinrichtung kann es sich beispielsweise um eine Maus handeln, durch welche ein Zeiger auf der Benutzeroberfläche 16 bewegt werden kann und die Schaltfläche 24 angeklickt werden kann.

Die Verifikation des Benutzers durch Erstellung zumindest eines Portraitbilds 30 vom Benutzer und Einbindung dieses Portraitbilds 30 in eine Signatur 28 einer E-Mail 20 ermöglicht die Verwendung in diversen kommerziellen Verfahren, etwa im Onlinehandel zur Verifikation eines Bestellers, der die Bestellung der E-Mail 20 absendet, oder auch Interaktionen im sogenannten Onlinebanking, bei welchem es von Bedeutung ist, dass der Absender einer E-Mail 20 sicher verifiziert wird. Die Verifikation erfolgt also erfindungsgemäß durch Erstellung eines Portraitbilds 30 des Benutzers, das automatisch in die Signatur 28 der Mail 20 eingebunden wird, gegebenenfalls darüber hinaus automatisches Absenden der Mail 20 bei Erstellung der Signatur 28 einschließlich des aufgenommenen Portraitbilds 30.

## Patentansprüche

1. Verfahren zur Erstellung einer personalisierten E-Mail (20) innerhalb eines Mail-Clients, umfassend die Erstellung einer Signatur (28) als Bestandteil der E-Mail (20) aufgrund der Interaktion eines Benutzers mit dem Mail-Client, **dadurch gekennzeichnet, dass** in die Signatur (28) automatisch zumindest ein Portraitbild (30) des Benutzers eingebunden wird.

2. Verfahren gemäß Anspruch 1, **dadurch gekennzeichnet, dass** das Portraitbild (30) durch eine Kamera (14) aufgenommen wird.

3. Verfahren gemäß Anspruch 2, **dadurch gekennzeichnet, dass** das Portraitbild (30) in einem Speicher gespeichert ist und aufgrund der Interaktion des Benutzers aus dem Speicher abgerufen wird.

4. Verfahren gemäß Anspruch 2, **dadurch gekennzeichnet, dass** das Portraitbild (30) durch eine Kamera (14) aufgrund der Interaktion des Benutzers zur Erstellung der Signatur (28) aufgenommen wird.

5. Verfahren gemäß Anspruch 4, **dadurch gekennzeichnet, dass** die Interaktion des Benutzers zur Erstellung der Signatur (28) und zur Aufnahme des Portraitbilds ferner ein Absenden der E-Mail (20) auslöst.

6. Verfahren gemäß einem der Ansprüche 1 bis 5, **dadurch gekennzeichnet, dass** das Portraitbild (30) ein Standbild ist.

7. Verfahren gemäß einem der Ansprüche 1 bis 5, **dadurch gekennzeichnet, dass** das Portraitbild (30) eine Videosequenz umfasst.

8. Datenverarbeitungsprogramm, umfassend Programmcodemittel zur Durchführung des Verfahrens gemäß einem der vorhergehenden Ansprüche.

9. Computerlesbares Medium, auf welchem ein Datenverarbeitungsprogramm gemäß Anspruch 8 gespeichert ist,

10. System zur Erstellung einer personalisierten E-Mail (20), umfassend ein computerlesbares Medium gemäß Anspruch 9, eine Kamera (14) und eine Eingabeeinrichtung zur Eingabe von Instruktionen durch einen Benutzer.
